# EUROPÄISCHE PATENTSCHRIFT

(11) **EP 1 361 105 B1**
(45) Veröffentlichungstag und Bekanntmachung des Hinweises auf die Patenterteilung: **12.03.2008**
(21) Anmeldenummer: 03009028.6
(22) Anmeldetag: 17.04.2003
(51) Int. Cl.: B60N 2/02, B60N 2/18

(54) **Fahrzeugsitz, insbesondere für Lastkraftwagen, Omnibusse od. dgl**
Vehicle seat, in particular for trucks, buses or similar
Siège de véhicule, en particulier pour les camions, les autobus ou similaires

(30) Priorität: 08.05.2002 DE 10220744
(43) Veröffentlichungstag der Anmeldung: 12.11.2003
(73) Patentinhaber: GRAMMER AG, 92224 Amberg (DE)
(72) Erfinder: Mertel, Walter, 92237 Sulzbach-Rosenberg (DE); Haller, Erwin, 92262 Birgland (DE)
(74) Vertreter: Ostriga, Sonnet, Wirths & Roche

(56) Entgegenhaltungen:
- WO-A-00/21779
- DE-A- 2 953 871
- DE-A- 19 641 372
- DE-C- 10 135 857
- US-A- 4 787 593
- US-A- 5 486 036

## Beschreibung

Die Erfindung betrifft einen Fahrzeugsitz, insbesondere für Lastkraftwagen, Omnibusse od. dgl. Ein solcher Fahrzeugsitz ist Gegenstand der älteren DE 101 09 526 A1.

Entsprechend der DE 101 09 526 A1 weist der Sitzkissenträger in seinem vorderen Bereich zwei nach unten zum Sitzgrundgestell hin vorragende vordere Fortsätze auf, welche eine horizontale Schwenkachse zur Anlenkung des vorderen Bereichs des Sitzkissenträgers am Sitzgrundgestell aufnehmen. Unterhalb seines hinteren Bereichs weist der Sitzkissenträger zwei nach unten zum Sitzgrundgestell hin vorragende hintere Fortsätze auf, an deren freien Enden jeweils ein Verstellgetriebe, und zwar jeweils ein Gewindetrieb, angelenkt ist.

Mittels der beiden Gewindetriebe kann der hintere Bereich des Sitzkissenträgers um die vordere horizontale Schwenkachse herum in eine Betriebsposition angehoben oder in eine Ruheposition abgesenkt werden.

Aus der DE 2953871 ist ein Fahrzeugsitz bekannt, bei welchem der Sizteilträger im hinteren Sitzbereich über Schwenkstützen an Stützschienen angelenkt ist. Mittels eines motorischen Antriebs kann die Schwenkstütze verschwenkt werden, wobei der Fahrzeugsitz angehoben bzw. abgesenkt wird.

Bei der Sitzhöhenverstellvorrichtung gemäß der US 5,4846,036 sind im vorderen und im hinteren Sitzbereich motorische Antriebe vorgesehen, die unter Zwischenschaltung eines Getriebes eine Kurbel antreiben, welche mittelbar mit dem Fahrzeugsitz verbunden ist. Auf diese Weise wird durch Verschwenken der Kurbel ein Heben bzw. Senken des Fahrzeugsitzes bewirkt.

Gemäß der Verstellvorrichtung der DE 196 41 372 A1treibt zur Verstellung des Fahrzeugsitzes ein motorischer Antrieb über ein Planetengetriebe im vorderen und im hinteren Sitzbereich eine Kurbel an, die unmittelbar mit der Tragstruktur des Fahrzeugsitzes verbunden ist.

Zur Verstellung des Fahrzeugsitzes weist die US 4,787,593 eine verschwenkbare Kurbel auf, die im hinteren Bereich des Fahrzeugsitzes angelenkt ist. Das Gelenk wird von einem Gelenkzapfen gebildet, der in einem Langloch geführt ist. Im vorderen Bereich ist der Fahrzeugsitz schwenkbar an der Fahrzeugstruktur befestigt.

Der Fahrzeugsitz gemäß der WO 00/21779 ist in einem vorderen Sitzbereich mittels eines Gelenks schwenkbar an der Fahrzeugstruktur befestigt. Der hintere Sitzbereich ist mit einem Hebelarm eines zweiarmigen Hebels verbunden. Der andere Hebelarm kann mittels eines motorischen Antriebs betätigt und der Hebel dabei verschwenkt werden. Durch Verschwenken des Hebels kann der Fahrzeugsitz angehoben bzw. abgesenkt werden.

Ausgehend von dem Fahrzeugsitz gemäß der US 4,787,593, liegt der Erfindung die Aufgabe zugrunde, einen Fahrzeugsitz mit einer kompakten und feinfühlig arbeitenden Verstellvorrichtung zu schaffen.

Gemeinsam mit den Merkmalen des Oberbegriffs des Anspruchs 1 wird diese Aufgabe mit den Kennzeichnungsmerkmalen des Anspruchs 1 entsprechend der Erfindung gelöst.

Ein Vorteil des erfindungsgemäßen Fahrzeugsitzes besteht darin, dass für den Antrieb der mindestens einen Kurbel lediglich ein Untersetzungsgetriebe und ein Motor erforderlich sind und so eine kompakte Bauweise erzielt wird, die bei dem Fahrzeugsitz gemäß der DE 101 09 526 A1 kaum zu realisieren ist. Durch Auswahl eines eine relativ große Untersetzung aufweisenden Untersetzungsgetriebes lässt sich zudem eine feinfühlige Verstellung verwirklichen.

Ein besonders robuster Aufbau ist entsprechend weiteren Erfindungsmerkmalen dadurch geschaffen worden, dass eine Gelenklasche mit ihrem inneren Ende am freien Kurbelende und mit ihrem äußeren Ende am hinteren Bereich des Sitzträgers angelenkt ist, wobei eine hinsichtlich der Kraftverteilung besonders günstige Anordnung darin besteht, dass das Untersetzungsgetriebe zwei auf einer gemeinsamen Drehachse angeordnete gleich orientierte Kurbeln antreibt. Die Erfindung bedient sich demnach eines Gelenkgetriebes, und zwar einer Kurbelschwinge, bei welcher die Koppel jeweils von einer Gelenklasche und die Schwinge insgesamt von dem mit seinem vorderen Bereich an der horizontalen Schwenkachse am Sitzgrundgestell angelenkten Sitzkissenträger gebildet ist.

Eine andere erfindungsgemäße Ausgestaltung, die eine gleichmäßige Kraftverteilung gestattet, besteht darin, dass unterseitig des hinteren Bereichs des Sitzkissenträgers eine sich parallel zur Schwenkachse erstreckende Betätigungsachse mit den beiden Kurbeln bewegungsgekoppelt ist, wobei an jeder Kurbel eine Gelenklasche angelenkt ist, deren äußeres Ende jeweils die Betätigungsachse mit einer Drehlagerstelleumgreift.

In weiterer Ausgestaltung der Erfindung bildet die den Sitzkissenträger anhebende oder absenkende Verstellvorrichtung als Bestandteil des Sitzgrundgestells eine etwa einsatzartige Baugruppe. Eine solche Baugruppe kann weitestgehend vorgefertigt und als einheitliches Modul für ansonsten individuell ausgestattete Fahrzeugsitze dienen.

Andere Erfindungsmerkmale ergeben sich aus zusätzlichen Unteransprüchen.

In den Zeichnungen ist ein bevorzugtes Ausführungsbeispiel entsprechend der Erfindung dargestellt, es zeigt
Fig. 1 die Struktur eines Fahrzeugsitzes ohne Sitzlehne in einer Seitenansicht,

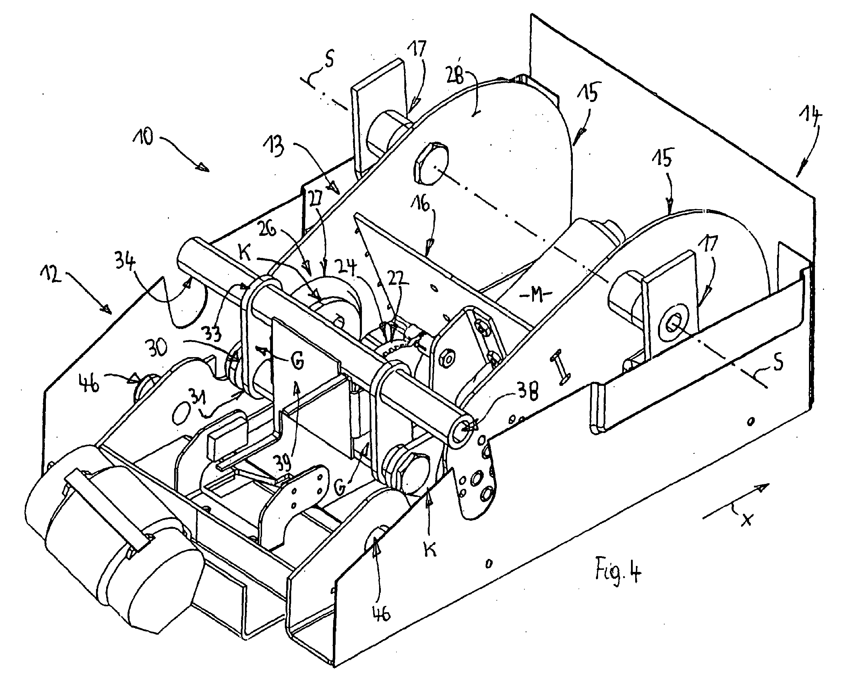

Fig. 2, 3 und 4 räumliche Darstellungen etwa entsprechend den mit II, III und IV bezeichneten Betrachtungspfeilen in Fig. 1,
Fig. 5 eine auseinandergezogene räumliche Darstellung etwa entsprechend dem mit V bezeichneten Betrachtungspfeil in Fig. 3 und
Fig. 6 in Anlehnung an die Darstellung gemäß Fig. 4 eine auseinandergezogene räumliche Darstellung.

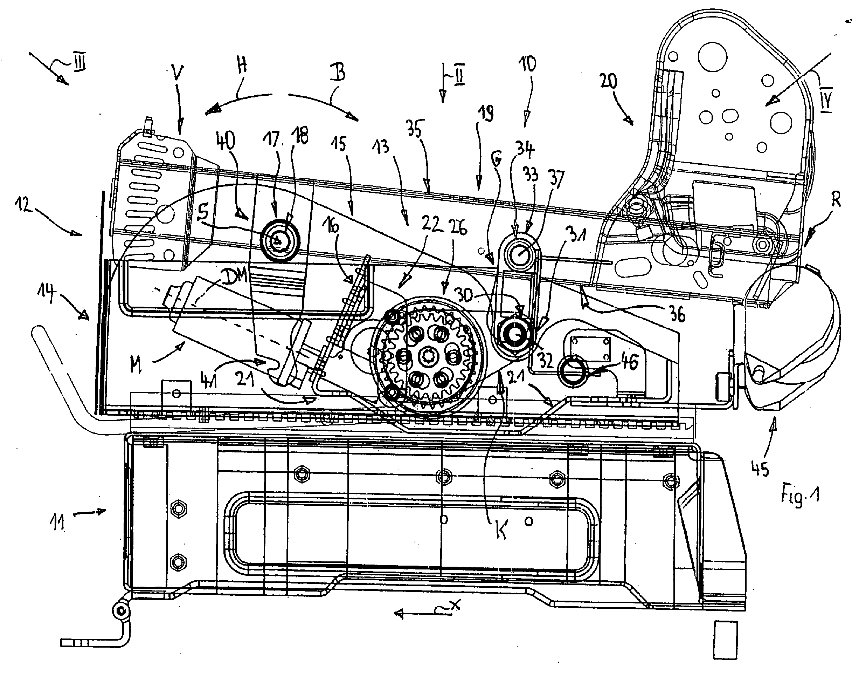

In Fig. 1 ist die Struktur eines Fahrzeugsitzes insgesamt mit 10 bezeichnet. Auf einer fahrzeugseitig zu befestigenden Konsole 11 ist ein entlang der Fahrtrichtung x längsverstellbares Sitzgrundgestell 12 angeordnet, welches eine insgesamt mit 13 bezeichnete, etwa einsatzartige Baugruppe 13 in einem Sitzgestellkasten 14 aufnimmt.

Die einsatzartige Baugruppe 13 weist zwei im Querabstand voneinander distanzierte Längsschenkel 15 auf, welche mittels eines Querschenkels 16 fest miteinander verbunden sind.

In ihren oberen Bereichen weisen die Längsschenkel 15 eine konvexe bogenförmige Kontur auf und bilden dort zwei Lageraufnahmen 17, in welche jeweils von außen ein Lagerzapfen 18 eines Sitzkissenträgers 19 einsteckgehaltert ist.

Die beiden Lageraufnahmen 17 der Baugruppe 13 und die beiden Lagerzapfen 18 des Sitzkissenträgers 19 bilden auf diese Weise eine Schwenkachse, deren geometrische Gerade strichpunktiert eingetragen und mit S bezeichnet ist. Der vordere Bereich des Sitzkissenträgers 19 trägt das Bezugszeichen V, während der hintere Bereich des Sitzkissenträgers 19 mit dem Bezugszeichen R versehen ist.

Oberhalb des hinteren Bereichs R ist der Sitzkissenträger 19 mit zwei im Querabstand voneinander angeordneten Beschlägen 20, von denen nur einer gezeigt ist, zur Anbringung einer nicht dargestellten Sitzlehne versehen.

Aus Fig. 1 ist zu ersehen, dass der Querschenkel 16 außerdem einen mehrfach abgekanteten Bodenbereich 21 bildet.

Der Querschenkel 16 ist geneigt zur Horizontalebene angeordnet und trägt auf seiner dem vorderen Bereich V des Sitzkissenträgers 19 zugewandten Hauptfläche einen Motor M, und zwar einen 24 V-Gleichstrommotor, dessen Drehachse DM z.B. in Fig. 1 mit einer gestrichelten Geraden angedeutet ist. Auf der dem hinteren Bereich R des Sitzkissenträgers 19 zugewandten Hauptfläche des Querschenkels 16 ist ein zusammenhängender Getriebegehäuseblock 22 befestigt, welcher ein Schneckengetriebe 23 und ein Stirnradgetriebe 24 enthält.

Wegen des Schneckengetriebes 23 können die Drehachse für den Abtrieb des Schneckengetriebes 23 und die Drehachse für den Abtrieb des Stirnradgetriebes 24 sich rechtwinklig zur Drehachse DM des Motors M erstrecken. Und zwar erfolgt der Abtrieb des Stirnradgetriebes 24 über eine als Sternwelle 25 ausgebildete Zwischenwelle, deren gestrichelt eingetragene Drehachse mit DW bezeichnet ist.

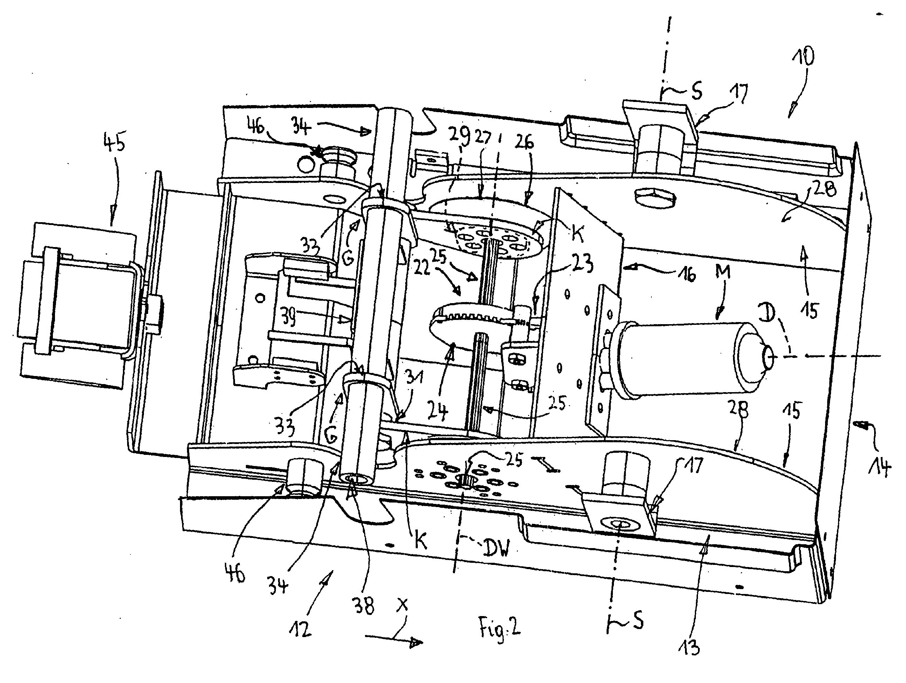

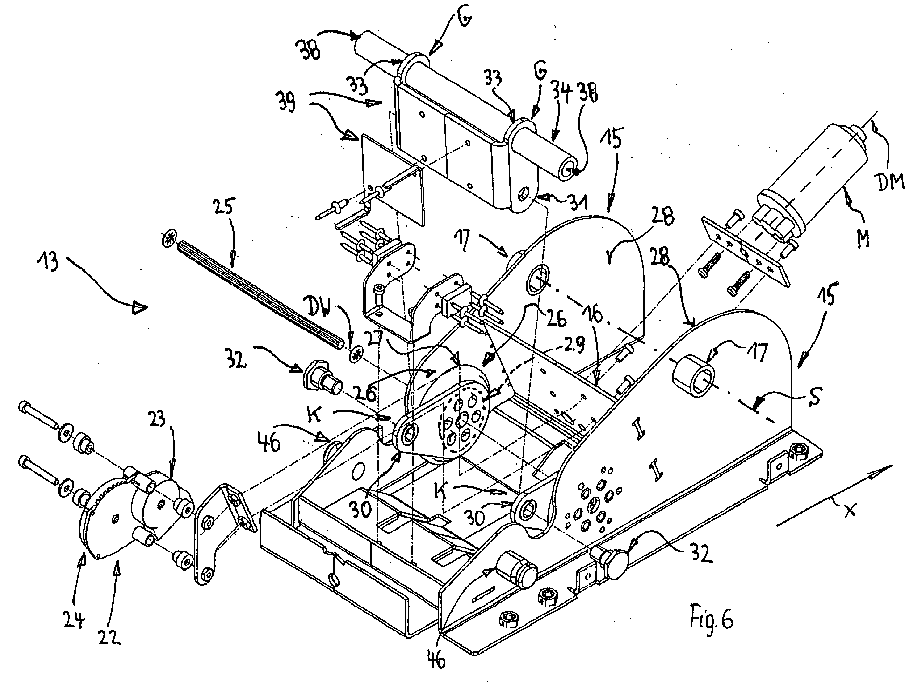

Die beiden einander diametral entgegengesetzten Enden der mittig vom Stirnradgetriebe 24 angetriebenen Sternwelle 25 greifen antriebsseitig formschlüssig in je ein insgesamt mit 26 bezeichnetes Planetengetriebe ein. Jedes Planetengetriebe 26 ist mit seiner dem Stirnradgetriebe 24 abgewandten Getriebegehäuseseite 27 an der inneren Hauptfläche 28 je eines Längsschenkels 15 befestigt. Die dem Stirnradgetriebe 24 zugewandte Abtriebseite des Planetengetriebes 26 hingegen ist als drehbarer deckelartiger Einsatz 29 ausgebildet, der an seiner Außenfläche jeweils eine Kurbel K trägt. Der deckelartige Einsatz 29 ist in den Fig. 2 und 6 jeweils mit einer kreisförmigen Strichlinienkontur gekennzeichnet. Die Drehachse DW bildet zugleich die gemeinsame geometrische Drehachse für die beiden Kurbeln K.

Die Sternwelle 25, welche beispielsweise mit dem nicht dargestellten Sonnenrad des Planetengetriebes 26 drehverbunden ist, durchsetzt sowohl die Kurbel K als auch den deckelartigen Einsatz 29, der mit dem Steg eines nicht dargestellten Planetenträgers drehverbunden ist, mit allseitigem Spiel.

Jede Kurbel K weist ein freies Kurbelende 30 auf, welches jeweils mit dem inneren Ende 31 einer Gelenklasche G mittels je eines Lagerzapfens 32 gelenkig verbunden ist.

Jedes freies Ende 33 einer Gelenklasche G umgreift eine sich parallel zur Schwenkachse S erstreckende Betätigungsachse 34 mit einer Drehlagerstelle.

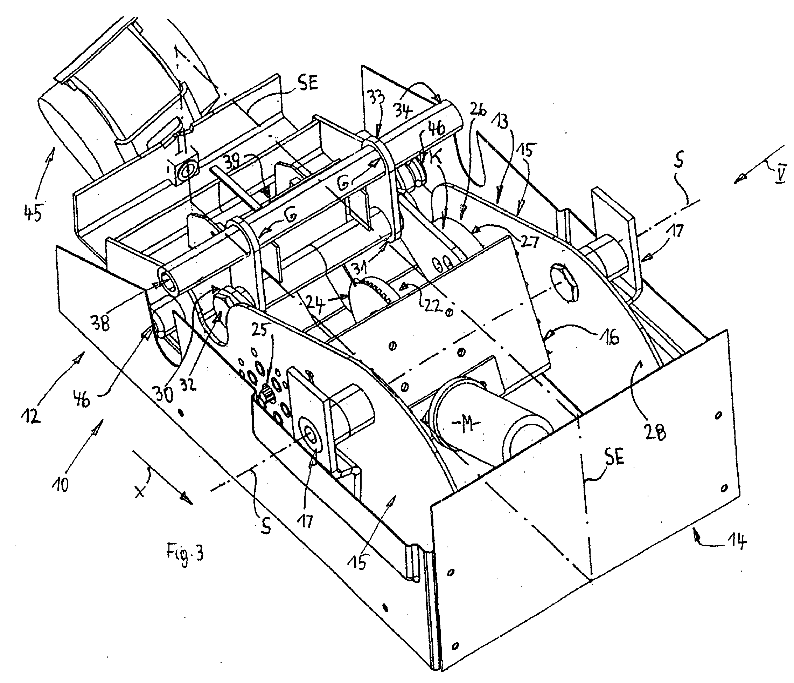

Die Baugruppe 13 weist zwei Kurbeln K auf, welche im gleichen Abstand zu einer vertikalen Symmetrieebene angeordnet sind, welche in Fig. 3 als strichpunktiertes Parallelogramm angedeutet und mit SE bezeichnet ist.

Die Betätigungsachse 34 stellt ein Rohr mit kreisförmigem Querschnitt dar. Die Betätigungsachse 34 greift in einen zwischen zwei Längsstreben 35 des Sitzkissenträgers 19 (s. Fig. 1) gebildeten unterseitigen Zwischenraum 36 ein, wobei in jeder Längsstrebe 35 ein Steckzapfen 37 gehalten ist, welcher jeweils in eine stirnseitige Öffnung 38 der Betätigungsachse 34 eingreift. Beide Gelenklaschen G können übrigens mittels einer Traversenanordnung 39 starr miteinander verbunden sein.

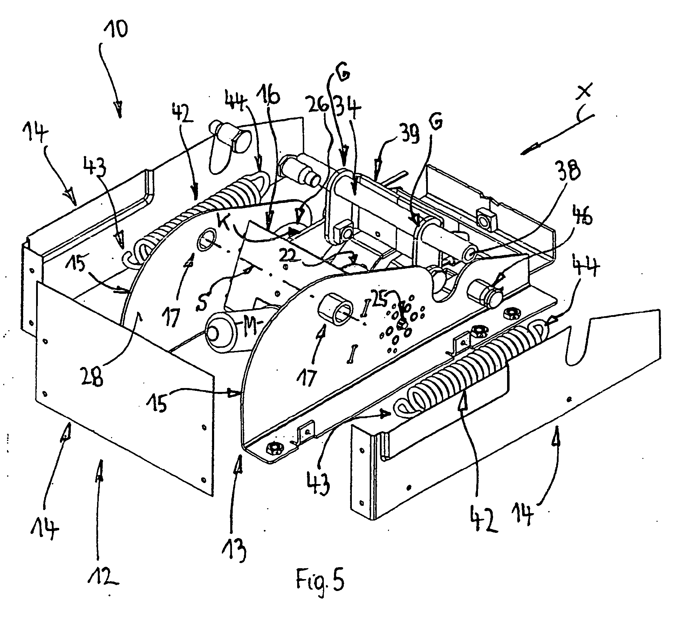

Der Sitzkissenträger 19 weist an seinen beiden Längsseiten (bei 35) jeweils eine von der Schwenkachse S durchsetzte Haltelasche 40 auf, an deren freiem Ende jeweils eine Schraubenzugfeder 42 mit ihrem beweglichen Ende 43 (vgl. Fig. 5) befestigt ist, deren dem vorderen Sitzkissenbereich V abgewandtes anderes Ende 44 am Sitzgrundgestell 12, und zwar am Einsatz 13, festgelegt ist. Dazu weist der Einsatz 13 einen mit einer Ringnut versehenen Haltebolzen 46 an jeder Längsseite auf.

Der Vollständigkeit halber sei noch ergänzt, dass die Sitzstruktur 10 am hinteren Bereich R einen Gurtwickler 45 für einen nicht dargestellten Sicherheitsgurt trägt.

Die Funktion der gezeigten Anordnung ist folgende:

Sobald der Motor M mit elektrischer Leistung beaufschlagt wird, dreht sich dessen in der Motordrehachse DM angeordnete Motorwelle, deren induzierte Drehzahl zunächst über das Schneckengetriebe 23 und sodann über das Stirnradgetriebe 24 reduziert wird. Die Sternwelle 25, welche den Abtrieb des Stirnradgetriebes 24 darstellt, treibt beide Planetengetriebe 26, welche die von der Sternwelle 25 induzierte Drehzahl weiterhin reduzieren, so dass die an den Abtriebsseiten 29 der Planetengetriebe 26 befestigten Kurbeln K eine stark reduzierte Drehbewegung mit einem erheblichen Drehmoment ausführen.

Der Drehwinkel der beiden Kurbeln K ist durch geeignete Maßnahmen, z.B. durch den Motor M steuernde Mikro- oder Näherungsschalter, begrenzt.

Je nach Drehsinn des Elektromotors M wird der Sitzkissenträger 19 um die Schwenkachse S herum in Richtung H nach oben oder in Richtung B nach unten geschwenkt. Dabei erfolgt die Schwenkung in Richtung H nach oben mit Unterstützung der sich entspannenden Schraubenzugfedern 42.

Die Planetengetriebe 26 der beschriebenen Bauart werden von der FAURECIA SIEGES D'AUTOMOBILE S.A. Le Bois de Flers, FR, entsprechend der Zeichnungsnummer 9420084 J hergestellt und vertrieben.

## Patentansprüche

1. Fahrzeugsitz, insbesondere für Lastkraftwagen, Omnibusse od. dgl., mit einem Sitzgrundgestell (12) und mit einem oberhalb des Sitzgrundgestells (12) angeordneten Sitzkissenträger (19), dessen vorderer Bereich (V) mittels einer horizontalen Schwenkachse (S) am Sitzgrundgestell (12) angelenkt ist und an dessen hinterem Bereich (R) ein letzteren anhebendes oder absenkendes Verstellgetriebe (23, 24, 26) mindestens mittelbar angreift, wobei das mit einem Motor (M) antriebsverbundene, als Untersetzungsgetriebe (23, 24, 26) ausgebildete Verstellgetriebe zwei Kurbeln (K) antreibt, welche in einer vertikalen Drehebene um eine sich horizontal und parallel zur Schwenkachse (S) erstreckenden Drehachse (DW) über einen begrenzten Drehwinkel hin- und hergehend drehbar sind, und wobei die freien Kurbelenden (30) mindestens mittelbar an dem hinteren Bereich (R) des Sitzkissenträgers (19) angelenkt sind, **dadurch gekennzeichnet, dass** jeweils eine Gelenklasche (G) mit ihrem inneren Ende (31)an jedem freien Kurbelende (30) angelenkt ist und dass unterseitig des hinteren Bereichs (R) des Sitzkissenträgers (19) eine sich parallel zur Schwenkachse (S) erstreckende Betätigungsachse (34) angeordnet ist, und dass jede Gelenklasche (G) mit ihrem äußeren Ende (33) die Betätigungsachse (34) mit einer Drehlagerstelle umgreift.

2. Fahrzeugsitz nach Anspruch 1, **dadurch gekennzeichnet, dass** die Betätigungsachse (34) in einen zwischen zwei Längsstreben (35) des Sitzkissenträgers (19) gebildeten unterseitigen Zwischenraum (36) eingreift und dass in jeder Längsstrebe (35) ein Steckzapfen (37) gehalten ist, welcher jeweils in eine stirnseitige Öffnung (38) der Betätigungsachse (34) eingreift.

3. Fahrzeugsitz nach Anspruch 1 oder nach Anspruch 2, **dadurch gekennzeichnet, dass** die Betätigungsachse (34) ein Rohr mit kreisförmigem Querschnitt ist.

4. Fahrzeugsitz nach einem der Ansprüche 1 bis 3, **gekennzeichnet durch** einen Antriebsmotor (M), dessen Motordrehachse (DM) etwa in der oder parallel zu der vertikalen Symmetrieebene (SE) angeordnet ist und an welchen abtriebsseitig das Untersetzungsgetriebe (23, 24, 26) angeschlossen ist, welches motorabtriebsseitig zunächst ein Schneckengetriebe (23), und im Kraftfluss aufeinanderfolgend, ein Stirnradgetriebe (24) und schließlich mindestens ein jeweils eine Kurbel (K) antreibendes Planetengetriebe (26) aufweist.

5. Fahrzeugsitz nach Anspruch 4, **dadurch gekennzeichnet, dass** das Gehäuse (22) des Stirnradgetriebes (24) abtriebseitig von einer Zwischenwelle (25) durchsetzt ist, deren beiden Enden jeweils antriebsseitig in ein Planetengetriebe (26) eingreifen, dessen dem Stirnradgetriebe (24) abgewandte Getriebegehäuseseite (27) jeweils innenseitig am Sitzgrundgestell befestigt ist, während eine dem Stirnradgetriebe (24) zugewandte Abtriebsseite des Planetengetriebes (26) als drehbarer deckelartiger Einsatz (29) ausgebildet ist, an dessen Außenfläche jeweils eine Kurbel (K) befestigt ist, und wobei Kurbel (K) und drehbarer deckelartiger Einsatz (29) von der Zwischenwelle (25) mit Spiel durchsetzt sind.

6. Fahrzeugsitz nach einem der Ansprüche 1 bis 5, **dadurch gekennzeichnet, dass** der hintere Bereich (R) des Sitzkissenträgers (19) entgegen der Rückstellkraft mindestens eines Federelements (42) absenkbar ist.

7. Fahrzeugsitz nach Anspruch 6, **dadurch gekennzeichnet, dass** der Sitzkissenträger (19) an beiden Längsseiten jeweils eine von der Schwenkachse (S) durchsetzte Haltelasche (40) aufweist, an deren freiem Ende (41) jeweils eine Schraubenzugfeder (42) mit ihrem beweglichen Ende (43) befestigt ist, deren dem vorderen Sitzkissenbereich (V) abgewandtes anderes Ende (44) am Sitzgrundgestell (12) festgelegt ist.

8. Fahrzeugsitz nach einem der Ansprüche 1 bis 7, **dadurch gekennzeichnet, dass** die den Sitzkissenträger (19) anhebende und absenkende Verstellvorrichtung als Bestandteil des Sitzgrundgestells (12) eine etwa einsatzartige Baugruppe (13) bildet, welche zwei sich parallel zur vertikalen Symmetrieebene (SE) erstreckende Längsschenkel (15) und mindestens einen die beiden Längsschenkel (15) miteinander verbindenden Querschenkel (16) aufweist.

9. Fahrzeugsitz nach Anspruch 8, **dadurch gekennzeichnet, dass** der mindestens eine Querschenkel (16) und die Längsschenkel (15) etwa plattenartig ausgebildet sind, wobei sich die Hauptflächen (28) der plattenartigen Längsschenkel (15) parallel zu der vertikalen Symmetrieebene (SE) erstrecken.

10. Fahrzeugsitz nach Anspruch 9, **dadurch gekennzeichnet, dass** zwischen den beiden Längsschenkeln (15) ein Querschenkel (16) befestigt ist, welcher den Motor (M) sowie einen gemeinsamen Getriebegehäuseblock (22) für das Schneckengetriebe (23) und für das Stirnradgetriebe (24) trägt, wobei die jeweils dem Stirnradgetriebe (24) abgewandte Getriebegehäuseseite (27) je eines Planetengetriebes (26) an der inneren Hauptfläche (28) des korrespondierenden Längsschenkels (15) befestigt ist.

## Claims

1. Vehicle seat, particularly for commercial vehicles, buses or the like, having a base frame (12) of the seat and having a seat-cushion-carrier (19) which is disposed above said base frame (12) of the seat and whose front region (V) is articulated on said base frame (12) of the seat by means of a horizontal axis of swivelling (S) and whose rear region (R) is acted upon, at least indirectly, by an adjusting mechanism (23, 24, 26) which raises or lowers said rear region; wherein said adjusting mechanism, which is connected to a motor (M) for driving purposes and is constructed as a reducing transmission (23, 24, 26), drives two cranks (K) which can be rotated within a vertical plane of rotation, in a manner moving to and fro over a limited angle of rotation, about an axis of rotation (DW) extending horizontally and parallel to the axis of swivelling (S); and wherein the free ends (30) of the cranks are articulated, at least indirectly, on the rear region (R) of the seat-cushion-carrier (19),
**characterised in that**
one joint strap (G), in each case, is connected by its inner end (31) to each free end (30) of a crank, and that an actuating pin (34), which extends parallel to the axis of swivelling (S), is disposed on the underside of the rear region (R) of the seat-cushion-carrier (19), and that each joint strap (G) engages, by its outer end (33), round the actuating pin (34) with a pivot-bearing point.

2. Vehicle seat according to claim 1,
**characterised in that**
the actuating pin (34) engages in an intervening space (36) on the underside, which space is formed between two longitudinal struts (35) on the seat-cushion-carrier (19), and that an insertion-type pin (37), which engages in an aperture (38) on the end face of the actuating pin (34) in each case, is held in each longitudinal strut (35).

3. Vehicle seat according to claim 1 or 2,
**characterised in that**
the actuating pin (34) is a tube with a circular cross-section.

4. Vehicle seat according to one of claims 1 to 3,
**characterised by**
a driving motor (M) whose axis of rotation (DM) is disposed approximately within, or parallel to, the vertical plane of symmetry (SE) and to which there is connected, on the output-drive side, the reducing transmission (23, 24, 26) which has, on the output-drive side of the motor, first of all a worm transmission (23) and, successively in the flux of force, a spur-gear transmission (24) and, finally, at least one planetary transmission (26) which drives a crank (K) in each case.

5. Vehicle seat according to claim 4,
**characterised in that**
the housing (22) of the spur-gear transmission (24) has, passing through it on the output-drive side, an intermediate shaft (25) whose two ends engage in each case, on the driving side, in a planetary transmission (26) whose transmission-housing side (27) that faces away from said spur-gear transmission (24) is fastened, on the inner side in each case, to the base frame of the seat, while an output-drive side of the planetary transmission (26), which output-drive side faces towards the spur-gear transmission (24), is constructed as a rotatable, cover-like insert (29), to the outer face of which a crank (K) is fastened in each case, and wherein the crank (K) and the rotatable, cover-like insert (29) have the intermediate shaft (25) passing through them with clearance.

6. Vehicle seat according to one of claims 1 to 5,
**characterised in that**
the rear region (R) of the seat-cushion-carrier (19) can be lowered against the restoring force of at least one spring element (42).

7. Vehicle seat according to claim 6,
**characterised in that**
the seat-cushion-carrier (19) has, on the two longitudinal sides in each case, a holding strap (40) through which the axis of swivelling (S) passes and to the free end (41) of which there is fastened in each case, by its movable end (43), a helical draw spring (42) whose other end (44), which faces away from the front region (V) of the seat cushion, is secured to the base frame (12) of the seat.

8. Vehicle seat according to one of claims 1 to 7,
**characterised in that**
the adjusting device which raises and lowers the seat-cushion-carrier (19) forms, as a constituent part of the base frame (12) of the seat, an approximately insert-like subassembly (13) which has two longitudinal flanks (15) which extend parallel to the vertical plane of symmetry (SE), and at least one transverse flank (16) which connects said two longitudinal flanks (15) to one another.

9. Vehicle seat according to claim 8,
**characterised in that**
the at least one transverse flank (16) and the longitudinal flanks (15) are of approximately platelike construction, the main faces (28) of the platelike longitudinal flanks (15) extending parallel to the vertical plane of symmetry (SE).

10. Vehicle seat according to claim 9,
**characterised in that**
there is fastened, between the two longitudinal flanks (15), a transverse flank (16) which carries the motor (M) and also a common transmission-housing block (22) for the worm transmission (23) and for the spur-gear transmission (24), wherein that transmission-housing side (27) of a planetary transmission (26) in each case that faces away from the spur-gear transmission (24) in each case is fastened to the inner main face (28) of the corresponding longitudinal flank (15).

## Revendications

1. Siège de véhicule, en particulier pour des camions, des autobus ou analogues, avec un bâti de base de siège (12) et avec un support de coussin d'assise (19) disposé au-dessus du bâti de base de siège (12), dont la zone avant (V) est articulée sur le bâti de base de siège (12) au moyen d'un axe de pivotement (S) horizontal et sur la zone arrière (R) duquel une transmission de réglage (23, 24, 26), levant ou abaissant cette dernière, agit au moins indirectement, la transmission de réglage, reliée en entraînement à un moteur (M), réalisée sous la forme de transmission à engrenage réducteur (23, 24, 26), entraînant deux bielles (K), montées à rotation dans un sens et dans l'autre dans un plan de rotation vertical, en une rotation de la valeur d'un angle de rotation limité, autour d'un axe de rotation (DW) s'étendant horizontalement et parallèlement à l'axe de pivotement (S), et les extrémités de bielle (30) libres étant articulées au moins indirectement à la zone arrière (R) du support de coussin d'assise (19), **caractérisé en ce que** chaque fois une patte d'articulation (G) est articulée, par son extrémité intérieure (31), sur chaque extrémité de bielle (30) libre, et **en ce que**, en face inférieure de la zone arrière (R) du support de coussin d'assise (19), est disposé un axe d'actionnement (34) s'étendant parallèlement à l'axe de pivotement (S), et **en ce que** chaque patte d'articulation (G) entoure par son extrémité extérieure (33) l'axe d'actionnement (34) avec un point formant palier de rotation.

2. Siège de véhicule selon la revendication 1, **caractérisé en ce que** l'axe d'actionnement (34) s'engage dans un espace intermédiaire (36) situé côté inférieur, formé entre deux longerons (35) du support de coussin d'assise (19), et **en ce que**, dans chaque longeron (35), est maintenu un tourillon d'enfichage (37), qui s'engage chaque fois dans une ouverture (38) frontale de l'axe d'actionnement (34).

3. Siège de véhicule selon la revendication 1 ou selon la revendication 2, **caractérisé en ce que** l'axe d'actionnement (34) est un tube à section transversale en forme de cercle.

4. Siège de véhicule selon l'une des revendications 1 à 3, **caractérisé par** un moteur d'entraînement (M), dont l'axe de rotation de moteur (DM) est disposé à peu près dans le ou parallèlement au plan de symétrie (SE) vertical et auquel est raccordée, côté mené, la transmission à engrenage réducteur (23, 24, 26), qui, côté mené du moteur, présente d'abord une transmission à vis (23) et successivement, dans le flux des forces, une transmission à roue à denture droite (24) et enfin au moins une transmission planétaire (26), entraînant chaque fois une bielle (K).

5. Siège de véhicule selon la revendication 4, **caractérisé en ce que** le boîtier (22) de la transmission à roue à denture droite (24) est traversé, côté mené, par un arbre intermédiaire (25) dont les deux extrémités s'engagent chacune, côté menant, dans une transmission planétaire (26), dont le côté de boîtier de transmission (27), opposé à la transmission à roue à denture droite (24), est fixé chaque fois côté intérieur sur le bâti de base de siège, tandis qu'un côté mené, tourné vers la transmission à roue à denture droite (24) de la transmission planétaire (26), est réalisé sous forme d'insert (29) rotatif du genre d'un couvercle, sur la surface extérieure duquel est chaque fois fixée une bielle (K), et la bielle (K) et l'insert (29) rotatif du genre d'un couvercle étant traversés, avec du jeu, par l'arbre intermédiaire (25).

6. Siège de véhicule selon l'une des revendications 1 à 5, **caractérisé en ce que** la zone arrière (R) du support de coussin d'assise (19) est susceptible de s'abaisser à l'encontre de la force de rappel d'au moins un élément élastique (42).

7. Siège de véhicule selon la revendication 6, **caractérisé en ce que** le support de coussin d'assise (19) présente, sur chacun des deux côtés longitudinaux, une patte de maintien (40) traversée par l'axe de pivotement (S), patte sur l'extrémité (41) libre de laquelle est chaque fois fixé, par son extrémité mobile (43), un ressort hélicoïdal de traction (42), dont l'autre extrémité (44), opposée à la zone de coussin d'assise avant (V), est fixée sur le bâti de base de siège (12).

8. Siège de véhicule selon l'une des revendications 1 à 7, **caractérisé en ce que** le dispositif de réglage, levant et abaissant le support de coussin d'assise (19), forme, en tant que constituant du bâti de base de siège (12), un groupe de construction (13), par exemple du genre d'un insert, présentant deux branches longitudinales (15), s'étendant parallèlement au plan de symétrie vertical (SE), et au moins une branche transversale (16) reliant ensemble les deux branches longitudinales (15).

9. Siège de véhicule selon la revendication 8, **caractérisé en ce que** la au moins une branche transversale (16) et les branches longitudinales (15) sont réalisées à peu près à la manière de plaque, les surfaces principales (28) des branches longitudinales (15) du genre de plaque s'étendant parallèlement au plan de symétrie vertical (SE).

10. Siège de véhicule selon la revendication 9, **caractérisé en ce que**, entre les deux branches longitudinales (15), est fixée une branche transversale (16), qui porte le moteur (M), ainsi qu'un bloc de boîtier de transmission (22) commun, pour la transmission à vis (23) et pour la transmission à roue à denture droite (24), le côté de boîtier de transmission (27), chaque fois opposé à la transmission à denture droite (24), chaque fois d'une transmission planétaire (26), étant fixé sur la face principale intérieure (28) de la branche longitudinale (15) correspondante.
